# EUROPÄISCHE PATENTSCHRIFT

(11) **EP 1 529 656 B1**
(45) Veröffentlichungstag und Bekanntmachung des Hinweises auf die Patenterteilung: **16.12.2009**
(21) Anmeldenummer: 04026066.3
(22) Anmeldetag: 03.11.2004
(51) Int. Cl.: B60B 11/02

(54) **Doppelrad für ein Fahrzeug**
Dual wheel for a vehicle
Roues jumelées pour un véhicule

(30) Priorität: 06.11.2003 DE 10352331
(43) Veröffentlichungstag der Anmeldung: 11.05.2005
(73) Patentinhaber: Kock & Sohn Räder GmbH, 48496 Hopsten-Schale (DE)
(72) Erfinder: Kock, Manfred, 48496 Hopsten-Schale (DE); Steglich, Christian, 49832 Freren (DE)
(74) Vertreter: Linnemann, Winfried

(56) Entgegenhaltungen:
- EP-A- 0 084 979
- EP-A- 0 094 916
- WO-A-97/17215
- CH-A- 450 933
- FR-A- 2 505 742
- GB-A- 2 031 351

## Beschreibung

Die vorliegende Erfindung betrifft ein Doppelrad für ein Fahrzeug, insbesondere für ein landwirtschaftliches Fahrzeug, wobei das Doppelrad ein Fahrzeugrad mit einer Fahrzeugradfelge, ein Zusatzrad mit einer Zusatzradfelge und eine die beiden Felgen unter Zwischenlage eines Distanzrings lösbar miteinander verbindende Spanneinrichtung umfaßt, wobei die Spanneinrichtung mehrere in Umfangsrichtung der Felgen verteilt angeordnete Spannstangen aufweist, die an ihrem fahrzeugradseitigen Ende mit an der Fahrzeugradfelge angeordneten Verbindungsmitteln und an ihrem zusatzradseitigen Ende mit einem an der Zusatzradfelge oder an dem Distanzring angebrachten Haltemittel in Eingriff bringbar sind, und wobei jede Spannstange mittels je eines Hebelverschlusses am zusatzradseitigen Ende der Spannstange unter Zugspannung setzbar oder entspannbar ist.

Ein Doppelrad der eingangs genannten Art ist aus EP 0 084 979 A2 bekannt. Bei dieser bekannten Konstruktion sind die Hebelverschlüsse lösbar an der Zusatzradfelge angebracht und besitzen jeweils einen einzelnen verschwenkbaren Spannhebel. Der Spannhebel ist an seinem fahrzeugradseitigen Ende mittels eines Schwenkgelenks beweglich mit einem Grundkörper des Hebelverschlusses verbunden. In Axialrichtung gesehen nach außen hin dazu versetzt liegt ein zweites Schwenkgelenk, in welchem das axial äußere Ende der Spannstange jeweils mit dem Spannhebel gelenkig verbunden ist. Durch Verschwenken des Spannhebels kann jeweils die zugehörige Spannstange unter Zugspannung gesetzt oder entspannt werden. Zur Sicherung der Spannstellung des Hebelverschlusses wird hier der Spannhebel über den Totpunkt des Hebelverschlusses verschwenkt, bis der Spannhebel am Grundkörper des Hebelverschlusses anliegt. Die Übertotpunktlage ist hier also durch die Lage von Spannstange und Spannhebel relativ zueinander bestimmt.

Als nachteilig wird bei diesem bekannten Stand der Technik angesehen, daß die Sicherung der Spannstellung ungenügend ist, weil schon die Ausübung relativ kleiner Kräfte, die leicht zufällig auf den Spannhebel einwirken können, zu einem Lösen des Hebelverschlusses führen kann. Hierdurch kann es zu gefährlichen Situationen und zu Schäden am Doppelrad und insbesondere an der Spanneinrichtung kommen.

Ein weiteres Doppelrad der eingangs genannten Art ist aus EP 0 094 916 A1 bekannt. Dieses weitere bekannte Doppelrad entspricht in seiner Konstruktion weitestgehend dem zuvor beschriebenen bekannten Stand der Technik mit dem Unterschied, daß hier die Spanneinrichtung am Distanzring angreift. Zu diesem Zweck ist der Distanzring mit einer radial nach innen hin eingewalzten Sicke versehen, an deren Innenumfang ein Haltering angeschweißt ist. Außerdem ist der Distanzring umlaufend mit der Zusatzradfelge fest verschweißt.

Als nachteilig wird auch bei diesem bekannten Doppelrad angesehen, daß die Arretierung der Spanneinrichtung durch eine Übertotpunktlage des Spannhebels relativ zur zugehörigen Spannstange bewirkt wird. Damit besteht auch hier die Gefahr, daß sich die Spanneinrichtung relativ leicht ungewollt löst. Durch die Lage im Distanzring ist zudem die Bedienung und Betätigung der Spanneinrichtung erschwert.

Für die vorliegende Erfindung stellt sich deshalb die Aufgabe, ein Doppelrad der eingangs genannten Art zu schaffen, das die vorstehend dargelegten Nachteile vermeidet und mit dem insbesondere eine höhere Sicherheit der Arretierung gegen ein ungewolltes Lösen und eine einfache Bedienung erreicht werden.

Die Lösung dieser Aufgabe gelingt erfindungsgemäß mit einem Doppelrad der eingangs genannten Art, das dadurch gekennzeichnet ist, daß der Hebelverschluß als Kniehebelverschluß mit einem ersten und einem zweiten Hebel ausgeführt ist und daß der Kniehebelverschluß in seiner Spannstellung durch eine Übertotpunktstellung der beiden Hebel relativ zueinander lagegesichert ist.

Vorteilhaft wird mit der Erfindung erreicht, daß im Hebelverschluß die Sicherung der Spannstellung nun durch die Lage der beiden Hebel des Kniehebelverschlusses relativ zueinander festgelegt wird. Damit wird vorteilhaft die Arretierung des Kniehebelverschlusses unabhängig von der Lage und vom Verlauf der zugehörigen Spannstange. Hierdurch wird eine hohe Sicherheit gegen ein ungewolltes Lösen erreicht, was für einen störungsfreien Betrieb und eine lange Haltbarkeit des Doppelrades und seiner Spanneinrichtung sorgt. Hinsichtlich der Bedienung ergeben sich keine zusätzlichen Bedienschritte, wodurch eine einfache Handhabung gewährleistet ist.

In weiterer Ausgestaltung ist bevorzugt vorgesehen, daß der Kniehebelverschluß einen mit dem Haltemittel in Eingriff bringbaren Grundkörper umfaßt, daß der erste Hebel mit seinem fahrzeugradseitigen Ende verschwenkbar am Grundkörper gelagert ist, daß der erste und der zweite Hebel über ein Schwenkgelenk miteinander verbunden sind und daß das zusatzradseitige Ende des zweiten Hebels in einer im wesentlichen in Axialrichtung verlaufenden Gleitführung innerhalb des Grundkörpers verschiebbar und verschwenkbar geführt und mit dem axial äußeren Ende der Spannstange verbunden ist. Mit dieser Ausgestaltung wird insbesondere eine kompakte und stabile Konstruktion des Kniehebelverschlusses erreicht, mit dem die benötigten Spannkräfte sicher aufgebracht werden können. Gleichzeitig kann jede Spannstange durch Verschwenken der Hebel des Kniehebelverschlusses zueinander soweit entspannt werden, daß die Teile der Spanneinrichtung bei der Montage des Zusatzrades leicht mit der Zusatzradfelge und der Fahrzeugradfelge in Eingriff und bei der Demontage des Zusatzrades ebenso leicht außer Eingriff mit der Zusatzradfelge und der Fahrzeugradfelge gebracht werden können.

Weiterhin schlägt die Erfindung vor, daß am zusatzradseitigen Ende des zweiten Hebels eine Buchse verschwenkbar gelagert ist, durch die der axial äußere Endbereich der Spannstange hindurchgeführt ist, und daß die Spannstange an ihrem axial äußeren Endbereich einen Gewindeabschnitt mit einer darauf aufgeschraubten, axial außen an der Buchse anliegenden Stellmutter aufweist. Vorteilhaft wird hiermit erreicht, daß die Spannstange eine gewisse Verschwenkbarkeit relativ zum Kniehebelverschluß erhält. Dies bietet die Möglichkeit, die Spanneinrichtung an unterschiedlich gestalteten Fahrzeugradfelgen und Zusatzradfelgen einzusetzen, bei denen die Spannstange in unterschiedlichen Winkeln zur Axialrichtung der Felgenanordnung verläuft. Die Stellmutter bietet die Möglichkeit, von außen her eine Anpassung der wirksamen Länge der Spannstange vorzunehmen, um unterschiedliche Abstände zwischen Fahrzeugradfelge und Zusatzradfelge auszugleichen. Da die Stellmutter jeweils am axial äußeren Endbereich der Spannstange sitzt, ist ein einfacher Zugang zur Stellmutter gewährleistet, was die Bedienung erleichtert.

Um eine besonders stabile Konstruktion und eine von Biegemomenten freie Zugkraftausübung auf die Spannstangen zu erreichen, schlägt die Erfindung weiterhin vor, daß die Hebel jeweils als beiderseits der zugehörigen Spannstange verlaufende Doppelhebel aus je zwei deckungsgleichen, parallelen Hebelteilen ausgeführt sind.

Eine weitere Ausgestaltung schlägt vor, daß in Spannstellung des Kniehebelverschlusses die Stellmutter verdrehgesichert zwischen den beiden Hebelteilen des den zweiten Hebel bildenden Doppelhebels liegt und daß in Lösestellung des Kniehebelverschlusses die Stellmutter verdrehbar außerhalb der beiden Hebelteile des den zweiten Hebel bildenden Doppelhebels liegt. Mit dieser Ausgestaltung wird vorteilhaft ohne zusätzliche Hilfsmittel eine Verdrehsicherung für die Stellmutter in der gespannten Stellung der Spanneinrichtung erzielt. Damit ist ein Lösen der Spanneinrichtung durch ein selbsttätiges, ungewolltes Verdrehen der Stellmutter sicher ausgeschlossen. In der Lösestellung des Kniehebelverschlusses liegt die Stellmutter dagegen frei, so daß dann bei Bedarf ein Verstellen der Stellmutter auf der Spannstange durch Verdrehen der Mutter erfolgen kann.

Um in der Verriegelungsstellung des Kniehebelverschlusses eine definierte Lage der Hebel festzulegen, ist weiter vorgesehen, daß die Übertotpunktstellung des Kniehebelverschlusses durch einen am Grundkörper ausgebildeten Anschlag definiert ist.

Um dem Bedienungspersonal das Spannen und Lösen der Kniehebelverschlüsse zu erleichtern, ist weiter vorgesehen, daß am ersten oder am zweiten Hebel eine Werkzeugaufnahme zur lösbaren Ankopplung eines Schwenkwerkzeugs für ein Verstellen des Kniehebelverschlusses vorgesehen ist. Im einfachsten Fall kann die Werkzeugaufnahme eine Hülse sein, in die ein Betätigungshebel einfach von außen her eingesteckt werden kann. Mit Hilfe des Hebels können dann die erforderlichen Hebelmomente zum Lösen oder Arretieren des Kniehebelverschlusses problemlos aufgebracht werden. Wenn das Betätigungswerkzeug aus der Werkzeugaufnahme entfernt ist, gibt es keine störenden vorstehenden Betätigungselemente mehr. Auf diese Weise werden Unfallgefahren durch von den Kniehebelverschlüssen nach außen vorstehende Betätigungselemente sicher vermieden.

Um eine zusätzliche Sicherheit gegen ein ungewolltes Lösen der Kniehebelverschlüsse der Spanneinrichtung zu erreichen, wird vorgeschlagen, daß durch jeden der beiden Hebel je eine Bohrung so geführt ist, daß die Bohrungen in Spannstellung des Kniehebelverschlusses deckungsgleich miteinander fluchten und eine Aufnahme für einen wieder abziehbaren Lösesicherungsstift bilden. Der Lösesicherungsstift verriegelt die beiden Hebel des Kniehebelverschlusses in deren Spannstellung gegeneinander, so daß eine selbsttätige Bewegung der Hebel in Löserichtung unterbunden ist. Der Lösesicherungsstift ist bevorzugt ein zweiarmiger Stift aus Federstahl, der nach seinem Einstecken in die Bohrungen durch einen federnden zweiten Arm in seiner Lage gesichert wird.

Eine weitere Ausgestaltung des Doppelrades sieht vor, daß das an der Zusatzradfelge oder an dem Distanzring angebrachte Haltemittel ein angeschweißter Haltering ist, der axial nach außen einen Überstand aufweist, hinter den der Grundkörper einhakbar ist. Der Haltering ist ein einfaches Bauteil, das bei entsprechender Materialstärke die auftretenden Spannkräfte problemlos aufnehmen kann. Außerdem sorgt der durchgehende Haltering dafür, daß das Zusatzrad in jeder beliebigen Stellung in Umfangsrichtung mit dem Fahrzeugrad verbunden werden kann, was insbesondere das Anbauen des Zusatzrades vereinfacht.

Eine Weiterbildung der Erfindung schlägt vor, daß wenigstens einer der beiden Hebel eine Sperrnase aufweist, die sich in Spannstellung des Kniehebelverschlusses axial innen an den Haltering anlegt und die in Lösestellung des Kniehebelverschlusses vom Haltering weggeschwenkt ist. Mit dieser Ausführung wird der Vorteil erreicht, daß der Kniehebelverschluß in Spannstellung an dem Haltering gesichert ist, so daß selbst bei dem unwahrscheinlichen Fall eines Brechens einer Spannstange der zugehörige Kniehebelverschluß an dem Haltering verbleibt und nicht verloren geht. Dies hat insbesondere den Vorteil, daß der Verschluß nicht verloren gehen kann und daß die massiven Teile der Spanneinrichtung nicht in z.B. von einem Schlepper gezogene Arbeitsmaschinen geraten können. Hierdurch werden Schäden an den Arbeitsmaschinen vermieden.

Zur Erzielung einerseits einer hohen Stabilität und langen Haltbarkeit und andererseits einer kostengünstigen Fertigung ist bevorzugt vorgesehen, daß der Grundkörper ein Stahlgußteil oder ein Stahlschweißteil ist und daß die Hebel Zuschnitte oder Stanzteile aus Stahlblech sind.

Ein Ausführungsbeispiel der Erfindung wird im folgenden anhand einer Zeichnung erläutert. Die Figuren der Zeichnung zeigen:
- Figur 1: ein Doppelrad in einem Teil-Axialschnitt,
- Figur 2: eine Spannstange und einen Hebelverschluß als Teile einer Spanneinrichtung des Doppelrades, in perspektivischer Ansicht,
- Figur 3: die Spannstange und den Hebelverschluß aus Figur 2 in Seitenansicht, teils im Längsschnitt, in Lösestellung des Hebelverschlusses, und
- Figur 4: die Spannstange und den Hebelverschluß gemäß Figur 2 und Figur 3 in Seitenansicht in Sperrstellung.

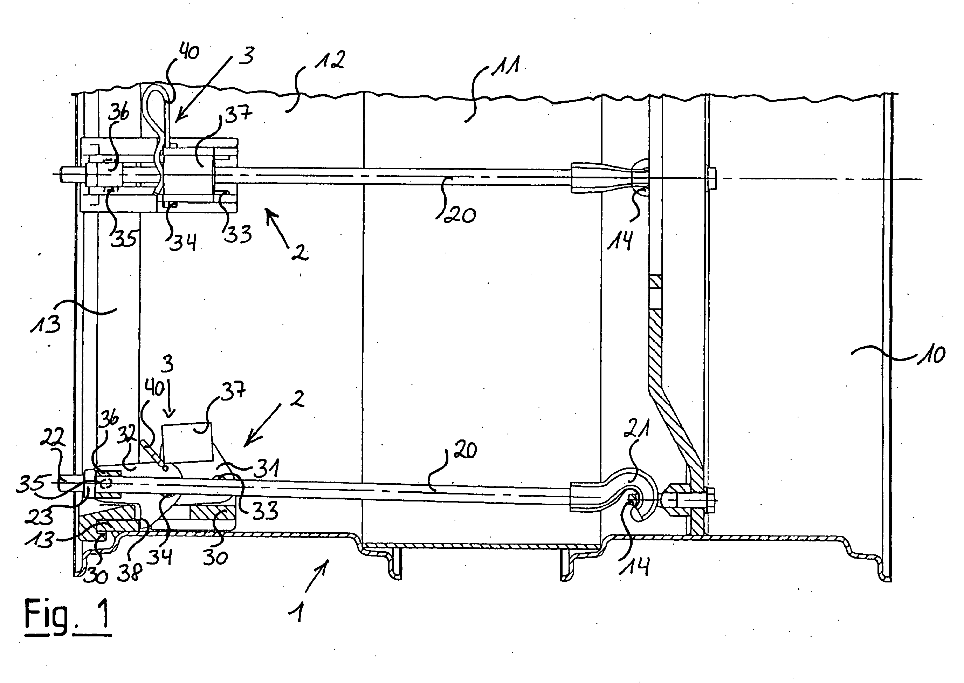

Figur 1 zeigt etwas mehr als die untere Hälfte eines Doppelrades 1 im Axialschnitt. Rechts in Figur 1 ist eine Fahrzeugradfelge 10 sichtbar, die mit einem hier nicht weiter dargestellten Fahrzeug, z.B. einem landwirtschaftlichen Schlepper, verbunden ist.

Nach links, also zu der von dem zugehörigen Fahrzeug abgewandten Seite hin, folgt ein Distanzring 11, dessen Durchmesser etwas kleiner ist als der größte Durchmesser der Fahrzeugradfelge 10. Mit seiner zur Fahrzeugradfelge 10 weisenden Stirnkante liegt der Distanzring 11 an einer nach außen weisenden Stufe der Fahrzeugradfelge 10 an.

Noch weiter nach links, also noch weiter axial nach außen vom Fahrzeug weg, folgt eine Zusatzradfelge 12, die mit dem Distanzring 11 zumindest abschnittsweise über den Umfang verteilt verbunden, vorzugsweise verschweißt, ist.

Die von der Fahrzeugradfelge 10 und der Zusatzradfelge 12 getragenen Reifen sind hier nicht dargestellt.

Die Zusatzradfelge 12 und der Distanzring 11 bilden eine Baueinheit, die lösbar mit der Fahrzeugradfelge 10 verbunden ist. Zu dieser Verbindung dient eine Spanneinrichtung 2, die hier aus insgesamt vier Spannstangen 20 mit jeweils einem axial außen angeordneten Hebelverschluß 3 besteht. In der Schnittdarstellung gemäß Figur 1 sind davon zwei Spannstangen 20 mit Hebelverschluß 3 sichtbar. Die Spannstangen 20 mit ihrem jeweils zugehörigen Hebelverschluß 3 sind gleichmäßig über den Umfang des Doppelrades 1 verteilt angeordnet, hier in einem Winkelabstand von jeweils 90°. Bei geringerer oder höherer Belastung können auch weniger oder mehr Spannstangen 20 mit Hebelverschluß 3 als Spanneinrichtung 2 vorgesehen sein.

An der Fahrzeugradfelge 10 ist für jede Spannstange 20 jeweils eine Halterung in Form einer Ösenmutter 14 angebracht, in die jeweils ein hakenförmiges Ende 21 der Spannstangen 20 einhakbar ist.

Die Spannstangen 20 verlaufen in einer annähernd axialen Richtung nach außen in ihren jeweils zugehörigen Hebelverschluß 3.

Zur Halterung der Hebelverschlüsse 3 an der Zusatzradfelge 12 ist an diese ein umlaufender Haltering 13 angeschweißt. Der Haltering 13 liegt dabei im Inneren der Zusatzradfelge 12, weist aber einen nach axial außen weisenden Überstand gegenüber dem Bereich des kleinsten Durchmessers der Zusatzradfelge 12 auf. Hinter diesen Überstand des Halterings 13 greift ein Grundkörper 30 des Hebelverschlusses 3 mit einem Haken 30', so daß Zugkräfte auf die Spannstange 20 ausgeübt werden können. Diese Zugkräfte in den Spannstangen 20 sorgen für eine feste, aber lösbare Verbindung der Fahrzeugradfelge 10 mit der Zusatzradfelge 12 und dem Distanzring 11.

Zur Erzeugung der Zugkraft innerhalb jeder Spannstange 20 ist der Hebelverschluß 3 als Kniehebelverschluß mit einem ersten Hebel 31 und einem zweiten Hebel 32 ausgeführt. Der erste Hebel 31 liegt axial innen an dem Grundkörper 30. Das axial innere Ende des ersten Hebels 31 ist dabei mittels eines ersten Schwenkgelenks 33 schwenkbeweglich mit dem Grundkörper 30 verbunden.

Der zweite Hebel 32 liegt axial außen vom ersten Hebel 31 am Grundkörper 30. Das axial innere Ende des zweiten Hebels 32 ist über ein zweites Schwenkgelenk 34 mit dem axial äußeren Ende des ersten Hebels 31 verbunden.

Das axial äußere Ende des zweiten Hebels 32 liegt ebenfalls verschwenkbar in einer etwa in Axialrichtung verlaufenden Gleitführung im Grundkörper 30. In dieser axial äußeren, dritten Schwenkachse 35 liegt eine Buchse 36, durch die hindurch das axial äußere Ende der Spannstange 20 verläuft.

An diesem axial äußeren Ende 22 der Spannstange 20 ist ein Gewinde vorgesehen, das zur Aufnahme einer Stellmutter 23 dient. Die Stellmutter 23 liegt an der axial äußeren Stirnfläche der Buchse 36 an. Mit der Stellmutter 23 kann die wirksame Länge der zugehörigen Spannstange 20 voreingestellt werden, um eine Anpassung an unterschiedliche Abstände zwischen den Ösen 14 einerseits und dem Haltering 13 andererseits ausgleichen zu können.

In der Figur 1 sind die Hebelverschlüsse 3 in ihrer Spannstellung dargestellt. In dieser Spannstellung stehen die Spannstangen 20 unter einer Zugspannung, die durch die Hebelverschlüsse 3 hervorgerufen ist. Eine Arretierung der Hebelverschlüsse 3 in ihrer Spannstellung erfolgt hier unter anderem durch eine Übertotpunktlage der Hebel 31, 32. Dabei liegt die Schwenkachse des zweiten Schwenkgelenks 34 radial außerhalb einer Verbindungslinie vom ersten Schwenkgelenk 33 zum dritten Schwenkgelenk 35.

Zum Lösen des Hebelverschlusses 3 werden die beiden Hebel 31, 32 so verschwenkt, daß das zweite Schwenkgelenk 34 radial nach innen über den Totpunkt hinweg bewegt wird. Gleichzeitig wird dadurch die Buchse 36 in Axialrichtung nach innen, gemäß Figur 1 nach rechts, bewegt. Hierdurch wird die zugehörige Spannstange 20 entspannt und der Grundkörper 30 kann mit seinem Haken 30' aus dem Haltering 13 ausgehakt werden. Anschließend können auch die Haken 21 am axial inneren Ende der Spannstangen 20 aus den Ösen 14 herausgenommen werden, wonach dann die Zusatzradfelge 12 mit dem Distanzring 11 von der Fahrzeugradfelge 10 entfernt werden kann. Der Anbau der Zusatzradfelge 12 mit dem Distanzring 11 an die Fahrzeugradfelge 10 erfolgt in umgekehrter Reihenfolge.

Zur Erzeugung der Schwenkbewegung der Hebel 31, 32 wird ein hier nicht dargestelltes, z.B. stangenförmiges Betätigungswerkzeug eingesetzt, das mit seinem einen Ende in eine Werkzeugaufnahme 37 eingesteckt werden kann. Die Werkzeugaufnahme 37 ist hier eine hohlzylindrische Hülse, die fest mit dem axial inneren, ersten Hebel 31 verbunden, zweckmäßig verschweißt, ist.

Eine weitere Sicherung gegen ein ungewolltes Lösen des Hebelverschlusses 30 bildet ein Lösesicherungsstift 40. Der Stift 40 ist durch Bohrungen geführt, die durch die beiden Hebel 31, 32 verlaufen und die in Sperrstellung des Hebelverschlusses 3 miteinander fluchten. Wie links oben in Figur 1 deutlich sichtbar ist, ist der Lösesicherungsstift 40 hier als zweiarmiger Federstift ausgebildet, der nach dem Einstecken in den Hebelverschluß 3 sich selbsttätig in seiner Lage sichert. Bei Bedarf kann der Lösesicherungsstift 40 manuell herausgezogen werden, wonach dann der Hebelverschluß 3 gelöst werden kann.

Weiterhin zeigt die Figur 1 links unten, daß an dem axial äußeren, zweiten Hebel 32 eine nach unten vorspringende Sperrnase 38 angeformt ist. In Sperrstellung des Hebelverschlusses 3, wie sie die Figur 1 zeigt, liegt die Sperrnase 38 axial innen an dem Haltering 13 an. Hiermit wird dafür gesorgt, daß selbst bei einem Bruch der Spannstange 20 der Hebelverschluß 3 sicher an dem Haltering 13 gehalten wird und sich nicht selbsttätig von der Zusatzradfelge 12 lösen kann.

Schließlich zeigt die Figur 1 links unten noch, daß der Grundkörper 30 in der dargestellten Sperrstellung des Hebelverschlusses 3 einen Anschlag für die beiden Hebel 31, 32 bildet, wodurch eine definierte Lage der Hebel 31, 32 in Sperrstellung festgelegt ist.

Wie die Figur 1 veranschaulicht, wird die Arretierung des Hebelverschlusses 3 zunächst durch die Übertotpunktstellung der beiden Hebel 31, 32 relativ zueinander bewirkt. Die Spannstange 20 ist an der Arretierung des Hebelverschlusses 3 in dessen Sperrstellung nicht beteiligt. Deshalb spielt es auch für die Arretierung des Hebelverschlusses 3 durch die Übertotpunktstellung der beiden Hebel 31, 32 keine Rolle, wie die Axialrichtung der Spannstange 20 relativ zu den Schwenkachsen der drei Schwenkgelenke 33, 34, 35 verläuft. Somit sind auch Konstruktionen möglich, bei denen das axial innere Ende 21 der Spannstangen 20 in Radialrichtung relativ weit innen liegt. Die Arretierung des Hebelverschlusses 3 durch die Übertotpunktstellung der beiden Hebel 31, 32 ist auch bei einem schräg zur Axialrichtung weisenden Verlauf der Spannstange 20 gewährleistet.

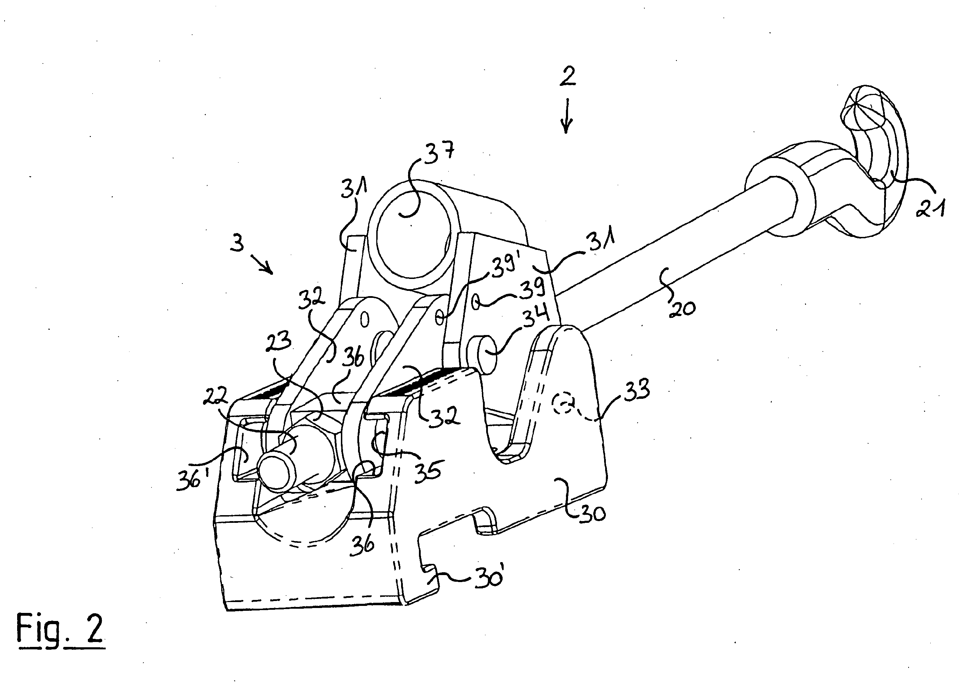

Figur 2 zeigt eine der Spannstangen 20 mit dem zugehörigen Kniehebelverschluß 3 aus Figur 1 in einer perspektivischen Ansicht. Vorne liegt dabei der Kniehebelverschluß 3, von dem die zugehörige Spannstange 20 nach hinten verläuft.

Den tragenden Teil des Hebelverschlusses 3 bildet dessen Grundkörper 30 mit seinem unterseitigen, nach hinten weisenden Haken 30'. Der Grundkörper 30 besitzt hier zwei seitliche, einander gegenüberliegende Wangen, zwischen denen die Anordnung der Hebel 31, 32 liegt. Dabei verdeutlicht die Figur 2, daß hier die Hebel 31, 32 jeweils als Doppelhebel mit je zwei spiegelsymmetrisch und dekkungsgleich ausgebildeten, voneinander beabstandeten Hebelteilen ausgeführt sind. Zwischen den Hebelteilen der Hebel 31, 32 verläuft das axial äußere Ende 22 der Spannstange 20 hindurch.

Der in Figur 2 hintere, axial innere, erste Hebel 31 ist mittels des ersten Schwenkgelenks 33 verschwenkbar mit dem Grundkörper 30 verbunden. Der Hebel 31 und der Hebel 32 sind miteinander mittels des zweiten Schwenkgelenks 34 gelenkig verbunden. Das dritte Schwenkgelenk 35 liegt in der Gleitführung 36' innerhalb des dem Betrachter zugewandten Teils des Grundkörpers 30. Die Schwenkachsen der drei Schwenkgelenke 33, 34, 35 verlaufen hier alle parallel zueinander und senkrecht zur Längsachse der Spannstange sowie parallel zur Umfangsrichtung der Zusatzradfelge 12 an der Stelle, an der der Hebelverschluß 3 jeweils angebracht wird.

Zwischen den beiden Hebelteilen des zweiten, axial äußeren Hebels 32 liegt die Buchse 36, durch die der axial äußere Endbereich 22 der Spannstange 20 hindurchgeführt ist. Auf das äußere Ende 22 der Spannstange 20 ist mittels Gewinde die Stellmutter 23 aufgeschraubt und liegt axial außen an der Buchse 36 an.

Am oberen Rand der beiden Hebelteile des ersten Hebels 31 ist die hülsenförmige Werkzeugaufnahme 37 angebracht, die zur Aufnahme des Betätigungswerkzeuges, beispielsweise einer Betätigungsstange, dient.

Vom Hebelverschluß 3 erstreckt sich die Spannstange 20 nach hinten und endet an ihrem axial inneren Ende in dem Haken 21.

In Figur 2 ist der Kniehebelverschluß 3 in einer teilweise gelösten Stellung dargestellt. In dieser Stellung sind die Hebel 31, 32 so verschwenkt, daß das zweite Schwenkgelenk 34 gemäß Figur 2 nach oben bewegt ist. Aus der Sperrstellung gelangt das zweite Schwenkgelenk 34 unter Überwindung einer Totpunktstellung, in der die Gelenke 33, 34, 35 auf einer Linie liegen, in die in Figur 2 gezeigte Lage. Durch eine noch weitergehende Verschwenkung der Hebel 31, 32 mit einer weiteren Entfernung des zweiten Schwenkgelenks 34 vom Grundkörper 30 nach oben, also relativ zur Zusatzradfelge 12 betrachtet radial nach innen, verschiebt sich das axial äußere, in Figur 2 dem Betrachter zugewandte Ende des zweiten Hebels 32 in Axialrichtung nach innen, wodurch die Spannstange 20 entlastet wird. In diesem Zustand kann der Grundkörper 30 mit seinem Haken 30' aus dem zugehörigen, in Figur 2 nicht dargestellten Haltering 13 ausgehakt werden.

Schließlich zeigt die Figur 2 noch die Lage von zwei Bohrungspaaren 39, 39' in den beiden Hebelteilen der Hebel 31, 32. In der in Figur 2 gezeigten Lösestellung des Hebelverschlusses 3 sind jeweils die Bohrungen 39, 39' gegeneinander verschwenkt. In der Sperrstellung des Hebelverschlusses 3, wie sie in Figur 1 dargestellt ist, fluchten die Bohrungen 39, 39' miteinander, so daß dann der in Figur 1 erläuterte Lösesicherungsstift 40 durch die Bohrungen 39, 39' geführt werden kann und eine Verschwenkung der Hebel 31, 32 gegeneinander unterbindet.

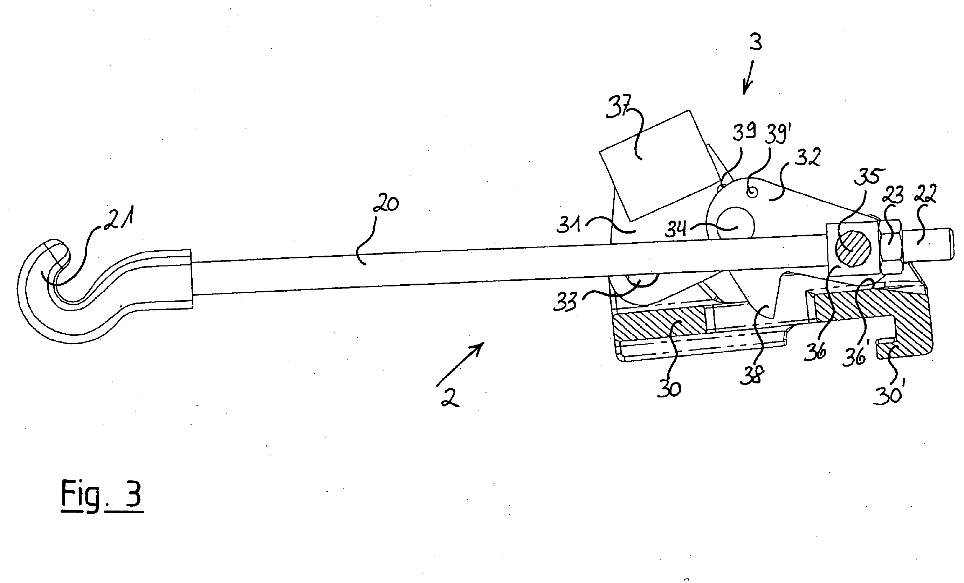

Figur 3 zeigt teils in Seitenansicht, teils im Längsschnitt eine Spannstange 20 mit ihrem zugehörigen Kniehebelverschluß in der teilweise gelösten Stellung gemäß Figur 2. In Figur 3 liegt rechts der Hebelverschluß 3 mit seinen Hebeln 31, 32. Das zweite Schwenkgelenk 34 ist hier gegenüber den beiden weiteren Schwenkgelenken 33 und 35 über eine Totpunktlage hinweg nach oben verschwenkt. Hierdurch kommt die in Figur 3 rechts unten sichtbare Sperrnase 38, die Teil des zweiten Hebels 32 ist, von der axial nach innen weisenden Kante des hier nicht dargestellten Halterings 13 (siehe Figur 1) frei. In diesem Zustand können der Haken 30' des Grundkörpers 30 und dann der gesamte Hebelverschluß 3 vom Haltering gelöst werden.

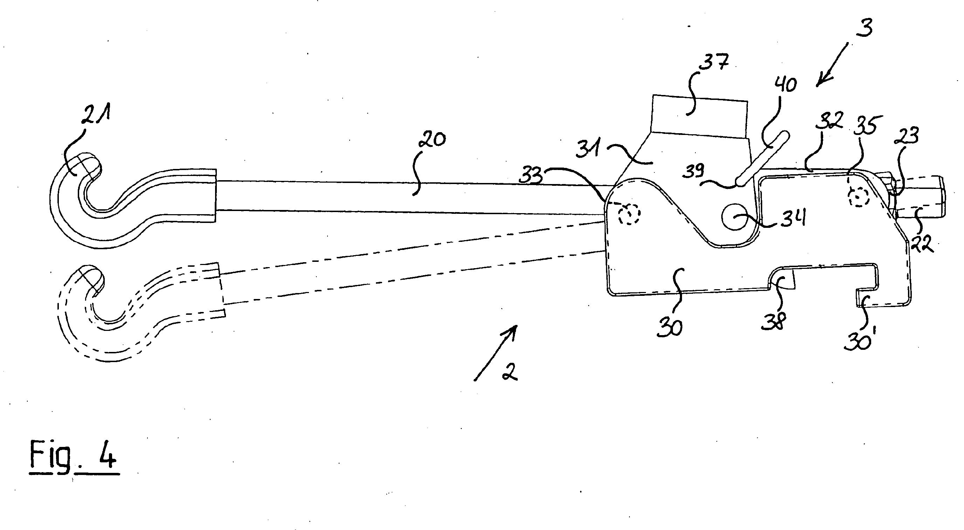

Figur 4 schließlich zeigt in Seitenansicht die Spannstange 20 und den Hebelverschluß 3 aus Figur 3, nun aber in Sperrstellung des Hebelverschlusses 3. In dieser Sperrstellung liegt das zweite Schwenkgelenk 34 unterhalb einer Verbindungslinie vom ersten Schwenkgelenk 33 zum dritten Schwenkgelenk 35, wodurch eine Übertotpunktstellung engestellt ist, die den Hebelverschluß 3 festlegt. Zur weiteren Sicherung der Sperrstellung dient der Lösesicherungsstift 40, der hier durch die Bohrungen 39 und 39' (nicht sichtbar) geführt ist.

Nach unten hin ragt aus dem Grundkörper 30 nun die Sperrnase 38 als Teil des zweiten Hebels 32 vor und sichert den Hebelverschluß 3 auf dem hier ebenfalls nicht eingezeichneten Haltering 13.

Wie zuvor schon erwähnt, ist die Übertotpunktstellung zur Arretierung des Hebelverschlusses 3 allein durch die relative Lage von erstem Hebel 31 und zweitem Hebel 32 zueinander festgelegt. Der Verlauf der Spannstange 20 hat keinen Einfluß auf die Übertotpunktstellung zur Arretierung des Hebelverschlusses 3. Damit besteht die Möglichkeit, daß die Spannstange 20 mit ihrem axial inneren Haken 21 unterschiedliche Ausrichtungen relativ zum Hebelverschluß 3 einnehmen kann, ohne daß dies einen Einfluß auf die Arretierung des Hebelverschlusses 3 in seiner Spannstellung hat. Eine zweite mögliche Lage der Spannstange 20 ist durch gestrichelte Linien in Figur 4 angedeutet.

## Patentansprüche

1. Doppelrad (1) für ein Fahrzeug, insbesondere für ein landwirtschaftliches Fahrzeug, wobei das Doppelrad (1) ein Fahrzeugrad mit einer Fahrzeugradfelge (10), ein Zusatzrad mit einer Zusatzradfelge (12) und eine die beiden Felgen (10, 12) unter Zwischenlage eines Distanzrings (11) lösbar miteinander verbindende Spanneinrichtung (2) umfaßt, wobei die Spanneinrichtung (2) mehrere in Umfangsrichtung der Felgen (10, 12) verteilt angeordnete Spannstangen (20) aufweist, die an ihrem fahrzeugradseitigen Ende (21) mit an der Fahrzeugradfelge (10) angeordneten Verbindungsmitteln (14) und an ihrem zusatzradseitigen Ende (22) mit einem an der Zusatzradfelge (12) oder an dem Distanzring (11) angebrachten Haltemittel (13) in Eingriff bringbar sind, und wobei jede Spannstange (20) mittels je eines Hebelverschlusses (3) am zusatzradseitigen Ende (22) der Spannstange (20) unter Zugspannung setzbar oder entspannbar ist,
**dadurch gekennzeichnet,**
**daß** der Hebelverschluß (3) als Kniehebelverschluß mit einem ersten und einem zweiten Hebel (31, 32) ausgeführt ist und daß der Kniehebelverschluß (3) in seiner Spannstellung durch eine Übertotpunktstellung der beiden Hebel (31, 32) relativ zueinander lagegesichert ist.

2. Doppelrad nach Anspruch 1, **dadurch gekennzeichnet, daß** der Kniehebelverschluß (3) einen mit dem Haltemittel (13) in Eingriff bringbaren Grundkörper (30) umfaßt, daß der erste Hebel (31) mit seinem fahrzeugradseitigen Ende verschwenkbar am Grundkörper (30) gelagert ist, daß der erste und der zweite Hebel (31, 32) über ein Schwenkgelenk (34) miteinander verbunden sind und daß das zusatzradseitige Ende des zweiten Hebels (32) in einer im wesentlichen in Axialrichtung verlaufenden Gleitführung (36') innerhalb des Grundkörpers (30) verschiebbar und verschwenkbar geführt und mit dem axial äußeren Ende (22) der Spannstange (20) verbunden ist.

3. Doppelrad nach Anspruch 2, **dadurch gekennzeichnet, daß** am zusatzradseitigen Ende des zweiten Hebels (32) eine Buchse (36) verschwenkbar gelagert ist, durch die der axial äußere Endbereich (22) der Spannstange (20) hindurchgeführt ist, und daß die Spannstange (20) an ihrem axial äußeren Endbereich (22) einen Gewindeabschnitt mit einer darauf aufgeschraubten, axial außen an der Buchse (36) anliegenden Stellmutter (23) aufweist.

4. Doppelrad nach einem der vorangehenden Ansprüche, **dadurch gekennzeichnet, daß** die Hebel (31, 32) jeweils als beiderseits der zugehörigen Spannstange (20) verlaufende Doppelhebel aus je zwei deckungsgleichen, parallelen Hebelteilen ausgeführt sind.

5. Doppelrad nach Anspruch 4, **dadurch gekennzeichnet, daß** in Spannstellung des Kniehebelverschlusses (3) die Stellmutter (23) verdrehgesichert zwischen den beiden Hebelteilen des den zweiten Hebel (32) bildenden Doppelhebels liegt und daß in Lösestellung des Kniehebelverschlusses (3) die Stellmutter (22) verdrehbar außerhalb der beiden Hebelteile des den zweiten Hebel (32) bildenden Doppelhebels liegt.

6. Doppelrad nach einem der Ansprüche 2 bis 5, **dadurch gekennzeichnet, daß** die Übertotpunktstellung des Kniehebelverschlusses (3) durch einen am Grundkörper (30) ausgebildeten Anschlag definiert ist.

7. Doppelrad nach einem der vorangehenden Ansprüche, **dadurch gekennzeichnet, daß** am ersten oder am zweiten Hebel (31, 32) eine Werkzeugaufnahme (37) zur lösbaren Ankopplung eines Schwenkwerkzeugs für ein verstellen des Kniehebelverschlusses (3) vorgesehen ist.

8. Doppelrad nach einem der vorangehenden Ansprüche, **dadurch gekennzeichnet, daß** durch jeden der beiden Hebel (31, 32) je eine Bohrung (39, 39') so geführt ist, daß die Bohrungen (39, 39') in Spannstellung des Kniehebelverschlusses (3) deckungsgleich miteinander fluchten und eine Aufnahme für einen wieder abziehbaren Lösesicherungsstift (40) bilden.

9. Doppelrad nach einem der Ansprüche 2 bis 8, **dadurch gekennzeichnet, daß** das an der Zusatzradfelge (12) oder an dem Distanzring (11), angebrachte Haltemittel (13) ein angeschweißter Haltering ist, der axial nach außen einen Überstand aufweist, hinter den der Grundkörper (30) einhakbar ist.

10. Doppelrad nach Anspruch 9, **dadurch gekennzeichnet, daß** wenigstens einer der beiden Hebel (31, 32) eine Sperrnase (38) aufweist, die sich in Spannstellung des Kniehebelverschlusses (3) axial innen an den Haltering (13) anlegt und die in Lösestellung des Kniehebelverschlusses (3) vom Haltering (13) weggeschwenkt ist.

11. Doppelrad nach einem der Ansprüche 2 bis 10, **dadurch gekennzeichnet, daß** der Grundkörper (30) ein Stahlgußteil oder ein Stahlschweißteil ist und daß die Hebel (31, 32) Zuschnitte oder Stanzteile aus Stahlblech sind.

## Claims

1. A twin wheel (1) for a vehicle, more particularly for an agricultural vehicle, wherein the twin wheel (1) comprises a vehicle wheel with a vehicle wheel rim (10), an auxiliary wheel with an auxiliary wheel rim (12) and a tensioning device (2) connecting the two rims (10, 12) to each other in a detachable manner and with a spacer ring (11) intermediately placed therebetween, wherein the tensioning device (2) includes a plurality of tension rods (20) arranged distributed in circumferential direction of the rims (10, 12), wherein said tension rods (20) can be brought into engagement with connection means (14) arranged on the vehicle wheel rim (10) at their vehicle-wheel-sided end (21) and with a holding means (13) attached to the auxiliary wheel rim (12) or to the spacer ring (11) at their auxiliary-wheel-sided end (22), and wherein each tension rod (20) can be put under tensile stress or be stress-relieved by means of one lever-type fastener (3) each on the auxiliary-wheel-sided end (22) of the tension rod (20),
**characterized in that**
the lever-type fastener (3) is designed as a toggle fastener with a first and a second lever (31, 32), and that, while being in its tensioned position, the toggle fastener (3) is secured in its position by the two levers (31, 32) being in an over-dead-center position in relation to each other.

2. The twin wheel according to Claim 1, **characterized in that** the toggle fastener (3) comprises a base body (30) which can be brought into engagement with the holdings means (13), that the first lever (31) is swivel-mounted to the base body (30) at its vehicle-wheel-sided end, that the first and second levers (31, 32) are connected to each other via a swivel joint, and that the auxiliary-wheel-sided end of the second lever (32) is guided in a sliding guide (36') such that it can be slid and swiveled within the base body (30) and said auxiliary-wheel-sided end of the second lever (32) is connected to the axially outer end (22) of the tension rod (20), said sliding guide (36') essentially extending in axial direction.

3. The twin wheel according to Claim 2, **characterized in that** a bushing (36) is swivel-mounted to the auxiliary-wheel-sided end of the second lever (32), wherein the axially outer end region (22) of the tension rod (20) is guided through said bushing (36), and that the tension rod (20) includes at its axially outer end region (22) a threaded section with an adjusting nut (23) which axially abuts against the outside of the bushing (36) and is screwed onto said threaded section.

4. The twin wheel according to anyone of the preceding claims, **characterized in that** the levers (31, 32) are each designed as double levers extending on either side of the associated tension rod (20) and each made of two congruent parallel lever parts.

5. The twin wheel according to Claim 4, **characterized in that**, with the toggle fastener (3) being in its tensioned position, the adjusting nut (23) is positioned between the two lever parts of the double lever forming the second lever (32) such that it is protected from rotating and that, with the toggle fastener (3) being in its released position, the adjusting nut (22) is positioned outside of the two lever parts of the double lever forming the second lever (32) such that it can be rotated.

6. The twin wheel according to anyone of Claims 2 to 5, **characterized in that** the over-dead-center position of the toggle fastener (3) is defined by a stop formed on the base body (30).

7. The twin wheel according to anyone of the preceding claims, **characterized in that** a tool receptacle (37) for detachably coupling a swivel tool for adjusting the toggle fastener (3) is provided at the first or at the second lever (31, 32).

8. The twin wheel according to anyone of the preceding claims, **characterized in that** a drilled hole (39, 39') is passed through each of the two levers (31, 32) such that, with the toggle fastener (3) being in its tensioned position, the drilled holes (39, 39') are aligned with each other congruently and form a receptacle for an anti-release securing pin (40) that can be pulled off again.

9. The twin wheel according to anyone of Claims 2 to 8, **characterized in that** the holding means (13) attached to the auxiliary wheel rim (12) or to the spacer ring (11) is a welded-on retaining ring comprising a projection in an axially outward direction, wherein the base body (30) can be hooked-in behind said projection.

10. The twin wheel according to Claim 9, **characterized in that** at least one of the two levers (31, 32) includes a locking lug (38) which axially abuts against the inside of the retaining ring (13) while the toggle fastener (3) is in its tensioned position and is swiveled away from the retaining ring (13) while the toggle fastener (3) is in its released position.

11. The twin wheel according to anyone of Claims 2 to 10, **characterized in that** the base body (30) is a cast steel part or a welded steel part and that the levers (31, 32) are blanks or punched parts made of steel sheet.

## Revendications

1. Roue double (1) pour un véhicule, notamment pour un véhicule agricole, la roue double (1) comprenant une roue de véhicule avec une jante de roue de véhicule (10), une roue supplémentaire avec une jante de roue supplémentaire (12) et un dispositif de serrage (2) reliant les deux jantes (10, 12) ensemble de manière amovible en intercalant un anneau écarteur (11), le dispositif de serrage (2) présentant plusieurs tirants (20) disposés de manière répartie dans la direction périphérique des jantes (10, 12) qui peuvent être amenés en engagement au niveau de leur extrémité côté roue de véhicule (21) avec des moyens de connexion (14) disposés sur la jante de roue de véhicule (10) et au niveau de leur extrémité côté roue supplémentaire (22) avec un moyen de retenue (13) monté sur la jante de roue supplémentaire (12) ou sur l'anneau écarteur (11), et chaque tirant (20) pouvant être amené en effort de traction ou pouvant être détendu au moyen d'une fermeture à levier (3) chacun sur l'extrémité côté roue supplémentaire (22) du tirant (20),
**caractérisée en ce**
**que** la fermeture à levier (3) est réalisée en tant que fermeture à genouillère avec un premier et un second levier (31, 32) et que la fermeture à genouillère (3) est sécurisée en position dans sa position de serrage par une position au-dessus du point mort des deux leviers (31, 32) l'un par rapport à l'autre.

2. Roue double selon la revendication 1, **caractérisée en ce que** la fermeture à genouillère (3) comprend un corps de base (30) pouvant être amené en engagement avec le moyen de retenue (13), que le premier levier (31) est logé avec son extrémité côté roue de véhicule à pivotement sur le corps de base (30), que le premier et le second levier (31, 32) sont reliés ensemble par le biais d'une articulation pivotante (34) et que l'extrémité côté roue supplémentaire du second levier (32) est guidée à coulissement et à pivotement dans une coulisse (36') s'étendant essentiellement dans la direction axiale au sein du corps de base (30) et reliée à l'extrémité axialement extérieure (22) du tirant (20).

3. Roue double selon la revendication 2, **caractérisée en ce qu'**une douille (36) à travers laquelle la zone d'extrémité axialement extérieure (22) du tirant (20) est guidée, est logée à pivotement à l'extrémité côté roue supplémentaire du second levier (32), et que le tirant (20) présente au niveau de sa zone d'extrémité axialement extérieure (22) une section filetée avec un écrou de réglage (23) vissé sur elle, reposant axialement à l'extérieur sur la douille (36).

4. Roue double selon l'une quelconque des revendications précédentes, **caractérisée en ce que** les leviers (31, 32) sont réalisés à chaque fois en tant que double levier s'étendant des deux côtés du tirant associé (20), constitué chacun de deux parties de levier parallèles égales.

5. Roue double selon la revendication 4, **caractérisée en ce qu'**en position de serrage de la fermeture à genouillère (3), l'écrou de réglage (23) se situe sécurisé contre la rotation entre les deux parties de levier du double levier formant le second levier (32) et qu'en position de desserrage de la fermeture à genouillère (3), l'écrou de serrage (22) se situe à rotation en dehors des deux parties de levier du double levier formant le second levier (32).

6. Roue double selon l'une quelconque des revendications 2 à 5, **caractérisée en ce que** la position au-dessus du point mort de la fermeture à genouillère (3) est définie par une butée réalisée sur le corps de base (30).

7. Roue double selon l'une quelconque des revendications précédentes, **caractérisée en ce qu'**un logement d'outil (37) pour l'accouplement amovible d'un outil pivotant pour un réglage de la fermeture à genouillère (3) est prévu sur le premier ou sur le second levier (31, 32).

8. Roue double selon l'une quelconque des revendications précédentes, **caractérisée en ce qu'**un alésage (39, 39') est guidé à travers chacun des deux leviers (31, 32) de telle sorte que les alésages (39, 39') s'alignent ensemble de manière égale en position de serrage de la fermeture à genouillère (3) et forment un logement pour une tige de sécurisation contre le desserrage (40) pouvant être de nouveau retirée.

9. Roue double selon l'une quelconque des revendications 2 à 8, **caractérisée en ce que** le moyen de retenue (13) monté sur la jante de roue supplémentaire (12) ou sur l'anneau écarteur (11) est un anneau de blocage soudé qui présente une projection axialement vers l'extérieur derrière laquelle le corps de base (30) peut être accroché.

10. Roue double selon la revendication 9, **caractérisée en ce qu'**au moins un des deux leviers (31, 32) présente un nez de blocage (38) qui s'appuie en position de serrage de la fermeture à genouillère (3) axialement à l'intérieur sur l'anneau de blocage (13) et qui est écarté par pivotement de l'anneau de blocage (13) en position de desserrage de la fermeture à genouillère (3).

11. Roue double selon l'une quelconque des revendications 2 à 10, **caractérisée en ce que** le corps de base (30) est une pièce en acier moulé ou une pièce soudée en acier et que les leviers (31, 32) sont des découpes ou des pièces découpées en tôle d'acier.
